# EUROPEAN PATENT APPLICATION

(11) **EP 0 940 494 A1**
(43) Date of publication of application: **08.09.1999**
(21) Application number: 99103305.1
(22) Date of filing: 19.02.1999
(51) Int. Cl.: D06F 58/28

(54) **Tumble drier with process control and conductivity sensor**

(30) Priority: 03.03.1998 DE 19808839
(71) Applicant: WHIRLPOOL CORPORATION, Benton Harbor Michigan 49022 (US)
(72) Inventor: Anderer, Roland, 21025 Comerio (IT); Mayr-Willius, Manfred, 21025 Comerio (IT)
(74) Representative: Guerci, Alessandro

(57) **Abstract**

The invention refers to a tumble drier with process control and a conductivity sensor for recording the conductivity of the laundry to be dried. The outlay for the insulation of current-carrying parts in the tumble drier can be greatly reduced by design by the conductivity sensor having sensor electronics allocated for wireless transmission of the conductivity recorded at the process control and by the sensor electronics being supplied over an isolating transformer and being decoupled from the process control and mains voltage. Only the conductivity sensor and the conductivity electronics are galvanically decoupled from the process control and the power part of the tumble drier, i.e. insulated with an increased class of insulation.

## Description

The invention refers to a tumble drier with process control and a conductivity sensor to record the conductivity of the laundry to be dried.

In known tumble driers of this type, a metal electrode sensor is generally used as a conductivity sensor whereby both metal electrodes must be accessible and are therefore able to be touched. Therefore increased insulation (class II) is required. In order to guarantee this in known tumble driers of this type, the current supply and all mains inputs and outputs must also be designed in accordance with the increased insulation (class II). However, this necessitates increased additional costs.

The task of this invention is to reduce the input required for the necessary increased insulation (class II) in tumble driers of the type mentioned at the start.

This task is solved by the invention by the conductivity sensor being allocated electronics for a sensor for wireless transmission to the process control of the conductivity recorded and by the sensor electronics being supplied by an isolating transformer and being decoupled from the process control and the mains voltage.

In this design, only the conductivity sensor with the sensor electronics is isolated to the higher insulation class whilst the process control mains inputs can be input directly. Mains voltage outputs can be switched directly over semiconductor switches or good value all-or-nothing relays. The outlay for the control of the tumble drier is thus greatly reduced.

The conductivity sensor has at least two easily accessible metal electrodes and the recorded conductivity can be transmitted continually to the process control.

The transmission of the conductivity to the process control can be designed in such a way that the recorded conductivity can be converted by the sensor electronics into a digital signal and can be transmitted over a wireless transmitter-receiver to the process control. In this way, the sensor electronics can convert the conductivity into a proportional pulse-wide or frequency modulated signal.

An optocoupler or a known radio link with a sender and receiver can advantageously be used as a wireless sender-receiver between the sensor electronics and the process control. The wireless transmission of the conductivity signal is carried out according to design in a digital form.

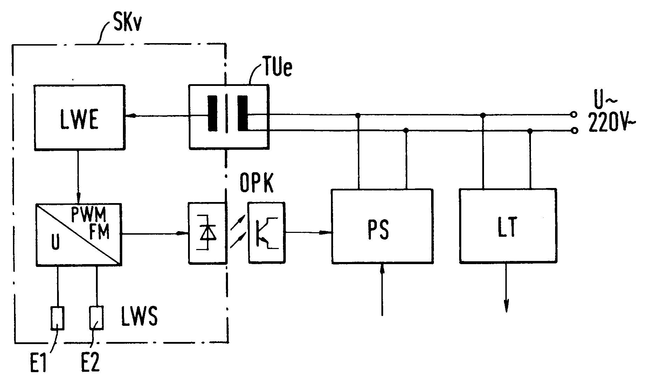

The invention is described in more detail using an embodiment shown in the figure as a block diagram.

As can be seen in the block diagram, two metal electrodes E1 and E2 form a conductivity sensor LWS which is supplied by a supply voltage U. The conductivity recorded is converted using sensor electronics LWE into a proportional signal able to be transmitted without wires. The signal can be a pulse-wide modulated signal PWM or a frequency modulated signal FM, where the pulse width or the frequency of the signal is proportional to the conductivity recorded. For the wireless transmission of the signal, an optocoupler OPK is used which causes a galvanic decoupling between the conductivity sensor LWS and the process control PS of the tumble drier. The sensor electronics LWE is also galvanically isolated from the mains operated process control PS and the power part LT of the tumble drier by an isolating transformer.

The process control PS is controlled by mains voltage signals and the power part LT supplies control signals with mains voltage potential. As these parts of the tumble drier are located where they cannot be touched, these parts do not have to be insulated to an increased class. Only the metal electrodes E1 and E2 are freely accessible and the sensor electronics LWE with the parts required for conductivity conversion and conductivity transmission coupled to the sensor electronics LWE are de-signed with an increased class of insulation SKV over the galvanic decoupling of the isolating transformer TUe and the wireless transmission link OPK from the normal electrical parts of the tumble drier. This results in an independent insulated sensor module which can be seen in the diagram as a block identified SKv and surrounded by a dotted line. The optocoupler OPK transmits the pulse-wide modulated or frequency modulated conductivity signal in a digital form to the process control PS. By the improved insulation of the conductivity sensor LWS from the process control PS which is designed as a consequence, the control inputs of the process control with mains voltage signals can be input directly and the performance part LT can control the power consumers using Triacs or cheap relays. In this way there is a great saving compared to the usual controls.

## Claims

1. Tumble drier with process control and a conductivity sensor for recording the conductivity of the laundry to be dried,
characterised in that
the conductivity sensor (LSW) has allocated sensor electronics (LWE) for wireless transmission of the conductivity recorded to the process control (PS) and
in that the sensor electronics (LWE) is supplied by an isolating transformer (Tue) and is decoupled from the process control (PS) and the mains voltage (U ∼)).

2. Tumble drier according to claim 1,
characterised in that
the conductivity sensor (LWS) has at least two metal electrodes (E1, E2).

3. Tumble drier according to claims 1 or 2,
characterised in that
the recorded conductivity is able to be converted by the sensor electronics (LWE) into a digital signal and can be transmitted over a wireless senderreceiver (OPK) to the process control (PS).

4. Tumble drier according to one of the claims 1 to 3,
characterised in that
the sensor electronics (LWE) converts the conductivity into a proportional pulse-wide modulated signal (PWM).

5. Tumble drier according to one of the claims 1 to 3,
characterised in that
the sensor electronics (LWE) converts the conductivity into a proportional frequency-modulated signal (FM).

6. Tumble drier according to one of the claims 1 to 5,
characterised in that
an optocoupler is used as a wireless sender-receiver (OPK).

7. Tumble drier according to one of the claims 1 to 5,
characterised in that
a radio link is used as a wireless sender-receiver.

8. Tumble drier according to claims 6 or 7,
characterised in that
the wireless sender-receiver (OPK) transmits the conductivity signal in a digital form to the process control (PS).
